# FASCICULE DE BREVET EUROPEEN

(11) **EP 3 074 309 B1**
(45) Date de publication et mention de la délivrance du brevet: **05.07.2017**
(21) Numéro de dépôt: 14802076.1
(22) Date de dépôt: 24.11.2014
(51) Int. Cl.: B64G 1/22

(54) **PROCÉDÉ ET DISPOSITIF DE COMMANDE D'UNE PHASE D'ACQUISITION DU SOLEIL PAR UN ENGIN SPATIAL**
VERFAHREN UND VORRICHTUNG ZUR STEUERUNG EINER SONNENLICHTAUFNAHMEPHASE EINES RAUMFAHRZEUGES
METHOD AND DEVICE FOR CONTROL OF A SUNLIGHT ACQUISITION PHASE OF A SPACECRAFT

(30) Priorité: 25.11.2013 FR 1361581
(43) Date de publication de la demande: 05.10.2016
(73) Titulaire: Airbus Defence and Space SAS, 78130 Les Mureaux (FR)
(72) Inventeur: CUILLERON, Nicolas, F-31400 Toulouse (FR); SPERANDEI, Jean, F-31200 Toulouse (FR); LAURENS, Philippe, F-31290 Beauteville (FR)
(74) Mandataire: Ipside
(86) Numéro de dépôt international: PCT/EP2014/075419
(87) Numéro de publication internationale: WO 2015/075237

(56) Documents cités:
- EP-A1- 0 394 897
- EP-A1- 0 788 045
- US-A- 5 535 965
- US-A- 5 558 305

## Description

### DOMAINE TECHNIQUE

La présente invention appartient au domaine de la commande d'engins spatiaux, et concerne plus particulièrement un procédé et un dispositif de commande d'une phase d'acquisition du Soleil par un engin spatial comportant au moins un générateur solaire mobile autour d'un axe Y.

Par « phase d'acquisition du Soleil », on entend une phase au cours de laquelle l'engin spatial est commandé de sorte à placer ledit engin spatial dans une orientation d'acquisition dans laquelle l'axe Y est sensiblement orthogonal à la direction D_{S} du Soleil par rapport à l'engin spatial. Dans cette orientation d'acquisition, le générateur solaire peut être dirigé vers le Soleil, dont les rayons ont alors une incidence normale sur ledit générateur solaire.

### ÉTAT DE LA TECHNIQUE

Une phase d'acquisition du Soleil est par exemple exécutée par un engin spatial, tel qu'un satellite, après séparation avec un lanceur dudit satellite. Une telle phase d'acquisition du Soleil est désignée dans la suite de la description par « phase d'acquisition initiale du Soleil ».

En effet, après séparation avec le lanceur, le satellite est autonome et doit assurer son autonomie électrique en cherchant à pointer ses générateurs solaires vers le Soleil pour fournir de la puissance électrique à une plateforme dudit satellite, et pour recharger des batteries dudit satellite. De manière conventionnelle, les batteries sont chargées avant le lancement du satellite et, après la séparation et avant que les générateurs solaires ne soient déployés et dirigés vers le Soleil, la puissance électrique nécessaire au fonctionnement de la plateforme du satellite est fournie par lesdites batteries.

Cette phase d'acquisition initiale du Soleil est rendue difficile du fait qu'au moment de la séparation avec le lanceur, le satellite peut être lâché avec une vitesse de rotation importante : jusqu'à 3°/s typiquement en orbite LEO (« Low Earth Orbit »), et de l'ordre de 1°/s en orbite GEO (« Geostationary Orbit »). La phase d'acquisition initiale du Soleil comporte donc une étape de réduction de la vitesse de rotation du satellite. Cette réduction de la vitesse de rotation du satellite doit être courte afin de ne pas risquer de décharger complètement les batteries dudit satellite.

Ainsi, le satellite comporte des actionneurs mis en oeuvre pour réduire le moment cinétique du satellite après séparation avec le lanceur.

Il est notamment connu, pour les satellites en orbite LEO, d'utiliser des magnéto-coupleurs exploitant le champ magnétique terrestre pour former des couples adaptés à réduire le moment cinétique du satellite. Pour les satellites en orbite MEO (« Medium Earth Orbit ») ou GEO (ou GTO - « Geostationary Transfer Orbit »), pour lesquels le champ magnétique terrestre est négligeable, on utilise généralement des propulseurs chimiques. De tels propulseurs chimiques sont avantageux en ce qu'ils peuvent être mis en oeuvre immédiatement après séparation avec le lanceur, en ce qu'ils ne requièrent pas de forte puissance électrique, et en ce qu'ils peuvent appliquer des couples importants sur le satellite, ce qui permet de réduire le moment cinétique et de placer le satellite dans l'orientation d'acquisition dans un temps très court (de l'ordre de quelques minutes).

Après que le moment cinétique du satellite a été suffisamment réduit et que le satellite a été placé dans l'orientation d'acquisition, les générateurs solaires sont déployés et dirigés vers le Soleil pour alimenter la plateforme dudit satellite et recharger les batteries. Le document US 5,558,305 décrit un procédé de commande d'une phase d'acquisition du Soleil selon le préambule de la revendication 1. Il est actuellement envisagé que les futurs satellites ne soient plus équipés de propulseurs chimiques, mais uniquement de propulseurs électriques (plasmiques). La phase d'acquisition initiale du Soleil deviendrait alors problématique, notamment pour les satellites en orbite MEO/GEO/GTO, car les propulseurs électriques ne peuvent pas se substituer aux propulseurs chimiques pour réduire le moment cinétique du satellite après séparation.

En effet, les propulseurs électriques ne peuvent pas être utilisés pendant les premiers jours suivant la séparation avec le lanceur. En outre, les propulseurs requièrent une forte puissance électrique (de l'ordre de quelques kW) et ne peuvent appliquer que des couples faibles sur le satellite (de l'ordre de 0.2 N·m). Par conséquent, la réduction du moment cinétique du satellite au moyen de propulseurs électriques nécessiterait une puissance électrique importante pendant une durée importante, ce qui est incompatible avec les batteries embarquées dans les satellites actuels, qui ont une capacité de l'ordre de 10 kW·h. Une telle capacité ne permet d'alimenter les propulseurs électriques qu'environ une heure, ce qui est insuffisant pour réduire suffisamment le moment cinétique du satellite, compte tenu des couples pouvant être formés par les propulseurs électriques actuels.

Les satellites actuels sont généralement équipés d'actionneurs inertiels électriques, tels que des volants d'inertie (roues de réaction, actionneurs gyroscopiques), qui sont mis en oeuvre pour contrôler l'attitude dudit satellite suivant trois axes. De tels actionneurs inertiels ont une capacité généralement insuffisante pour compenser seuls le moment cinétique du satellite après séparation, mais peuvent être mis en oeuvre après que les autres actionneurs (magnéto-coupleurs, propulseurs chimiques, etc.) ont suffisamment diminué ledit moment cinétique dudit satellite.

Une alternative pourrait consister à dimensionner les actionneurs inertiels électriques de sorte à ce qu'ils présentent une capacité adaptée à compenser seuls le moment cinétique du satellite après séparation. Toutefois, cela entrainerait une augmentation importante de la masse et du volume desdits actionneurs inertiels. A titre d'exemple, le moment cinétique initial d'un satellite après lancement peut être de l'ordre de 500 N·m·s à 1000 N·m·s, alors que la capacité des actionneurs inertiels embarqués dans un satellite est généralement de l'ordre de 50 N·m·s à 100 N·m·s. En outre, quand bien même les actionneurs inertiels seraient dimensionnés de sorte à présenter une capacité de 1000 N·m·s, des conditions particulièrement défavorables de séparation pourraient toujours transférer au satellite un moment cinétique initial supérieur à 1000 N·m·s, en dehors de la capacité des actionneurs inertiels.

Il est à noter qu'une phase d'acquisition du Soleil peut également être exécutée lorsque le satellite est en mode survie. Les observations précédentes restent valables pour une telle phase d'acquisition du Soleil en mode survie.

### EXPOSÉ DE L'INVENTION

La présente invention a pour objectif de remédier à tout ou partie des limitations des solutions de l'art antérieur, notamment celles exposées ci-avant, en proposant une phase d'acquisition du Soleil qui puisse être mise en oeuvre y compris par des engins spatiaux dépourvus de propulseurs chimiques.

A cet effet, et selon un premier aspect, l'invention concerne un procédé de commande d'une phase d'acquisition du Soleil par un engin spatial avec un moment cinétique non nul d'axe D_{H}, ledit engin spatial comportant un corps, un générateur solaire et un mécanisme d'entrainement dudit générateur solaire en rotation autour d'un axe Y. Selon l'invention, le procédé de commande comporte des étapes de :
- commande d'actionneurs de l'engin spatial de sorte à placer ledit engin spatial dans une orientation intermédiaire, par rapport au moment cinétique, dans laquelle l'axe Y est sensiblement orthogonal à l'axe D_{H} du moment cinétique,
- commande du mécanisme d'entrainement du générateur solaire, préalablement au moins partiellement déployé, de sorte à orienter ledit générateur solaire vers le Soleil,
- commande d'actionneurs de l'engin spatial de sorte à réduire le moment cinétique dudit engin spatial,
- commande d'actionneurs de l'engin spatial de sorte à placer ledit engin spatial dans une orientation d'acquisition, par rapport au Soleil, dans laquelle l'axe Y est sensiblement orthogonal à la direction D_{S} du Soleil par rapport à l'engin spatial.

L'orientation intermédiaire de l'engin spatial permet d'assurer qu'il existe toujours une orientation du générateur solaire permettant d'assurer l'autonomie électrique dudit engin spatial. En déployant au moins partiellement le générateur solaire avant de réduire tout ou partie du moment cinétique de l'engin spatial, les contraintes liées à l'autonomie électrique de l'engin spatial sont relâchées. Ladite réduction de moment cinétique peut notamment être étalée dans le temps et/ou mettre en oeuvre des actionneurs électriques.

Dans des modes particuliers de mise en oeuvre, le procédé de commande de phase d'acquisition du Soleil peut comporter en outre l'une ou plusieurs des caractéristiques suivantes, prises isolément ou selon toutes les combinaisons techniquement possibles.

Dans un mode particulier de mise en oeuvre, le placement de l'engin spatial dans l'orientation intermédiaire met en oeuvre des actionneurs inertiels dudit engin spatial, de préférence des actionneurs gyroscopiques et/ou des roues de réaction.

Dans un mode particulier de mise en oeuvre, le placement de l'engin spatial dans l'orientation d'acquisition met en oeuvre des actionneurs inertiels dudit engin spatial, de préférence des actionneurs gyroscopiques et/ou des roues de réaction.

Dans un mode particulier de mise en oeuvre, les actionneurs inertiels sont mis en oeuvre, pour placer l'engin spatial dans l'orientation d'acquisition, lorsque le moment cinétique de l'engin spatial devient inférieur à une valeur seuil prédéfinie.

Dans un mode préféré de mise en oeuvre, la réduction du moment cinétique de l'engin spatial, préalablement placé dans l'orientation intermédiaire, met en oeuvre des propulseurs électriques dudit engin spatial.

Dans un mode particulier de mise en oeuvre, seuls des actionneurs électriques sont mis en oeuvre au cours de la phase d'acquisition du Soleil.

Dans un mode particulier de mise en oeuvre, l'axe d'inertie maximale de l'engin spatial, lorsque le générateur solaire dudit engin spatial est déployé, étant orthogonal à l'axe Y, le générateur solaire est au moins partiellement déployé préalablement au placement de l'engin spatial dans l'orientation intermédiaire et, au cours du placement dudit engin spatial dans ladite orientation intermédiaire, on effectue un amortissement de nutation.

Dans un mode particulier de mise en oeuvre, l'axe d'inertie minimale de l'engin spatial étant orthogonal à l'axe Y, on effectue, au cours du placement de l'engin spatial dans l'orientation intermédiaire, un contrôle de nutation visant à aligner l'axe d'inertie minimale dudit satellite avec l'axe D_{H} du moment cinétique.

Dans un mode particulier de mise en oeuvre, l'orientation du générateur solaire au cours de la réduction du moment cinétique est déterminée en fonction de l'angle entre la direction D_{S} du Soleil et l'axe D_{H} du moment cinétique, dit « angle de dépointage θ ».

Dans un mode particulier de mise en oeuvre, l'orientation du générateur solaire est maintenue fixe par rapport au corps de l'engin spatial au cours de la réduction du moment cinétique.

Dans un mode particulier de mise en oeuvre, le générateur solaire est maintenu, au cours de la réduction du moment cinétique, de sorte qu'une surface photosensible dudit générateur solaire est :
- sensiblement parallèle à l'axe D_{H} du moment cinétique lorsque |cos θ| < V_{S1}, V_{S1} étant une valeur seuil prédéfinie,
- sensiblement orthogonale à l'axe D_{H} lorsque |cos θ| > V_{S1}, ladite surface photosensible étant orientée du côté du Soleil.

Dans un mode particulier de mise en oeuvre, l'engin spatial comportant deux générateurs solaires montés sur des mécanismes d'entrainement respectifs adaptés à faire tourner lesdits générateurs solaires autour d'axes Y respectifs parallèles, lesdits générateurs solaires sont maintenus, au cours de la réduction du moment cinétique, de sorte que des surfaces photosensibles respectives desdits générateurs solaires sont sensiblement parallèles à l'axe D_{H} du moment cinétique et avec des directions de pointage respectives opposées lorsque |cos θ| < V_{S2}, V_{S2} étant une valeur seuil prédéfinie.

Dans un mode particulier de mise en oeuvre, la phase d'acquisition du Soleil par l'engin spatial est commandée à distance par un dispositif de commande, des signaux de commande étant successivement déterminés et envoyés à l'engin spatial par ledit dispositif de commande.

Selon un second aspect, l'invention concerne un produit programme d'ordinateur comportant un ensemble d'instructions de code de programme qui, lorsqu'elles sont exécutées par un processeur, mettent en oeuvre un procédé de commande d'une phase d'acquisition du Soleil par un engin spatial selon l'un quelconque des modes de mise en oeuvre de l'invention.

Selon un troisième aspect, l'invention concerne un dispositif de commande d'une phase d'acquisition du Soleil par un engin spatial avec un moment cinétique non nul d'axe D_{H}, ledit engin spatial comportant un corps, des actionneurs, un générateur solaire et un mécanisme d'entrainement dudit générateur solaire en rotation autour d'un axe Y, ledit dispositif de commande comportant des moyens configurés pour commander la phase d'acquisition du Soleil selon l'un quelconque des modes de mise en oeuvre de l'invention.

Selon un quatrième aspect, l'invention concerne un système spatial comportant un engin spatial comportant un corps, des actionneurs, un générateur solaire et un mécanisme d'entrainement dudit générateur solaire en rotation autour d'un axe Y, ledit système comportant en outre un dispositif de commande d'une phase d'acquisition du Soleil par ledit engin spatial selon l'un quelconque des modes de réalisation de l'invention.

Dans un mode préféré de réalisation, l'engin spatial est dépourvu de propulseur chimique.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un système spatial comportant un engin spatial devant exécuter une phase d'acquisition du Soleil,
- Figure 2 : un diagramme illustrant les principales étapes d'un procédé de commande de phase d'acquisition du Soleil,
- Figure 3 : une courbe représentant l'ensoleillement moyen de générateurs solaires d'un engin spatial placé dans une orientation intermédiaire au cours d'une phase d'acquisition du Soleil,
- Figure 4 : une représentation schématique d'un exemple de mise en oeuvre d'une phase d'acquisition du Soleil.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La présente invention concerne les phases d'acquisition du Soleil par un engin spatial comportant au moins un générateur solaire mobile autour d'un axe Y de l'engin spatial.

Par « phase d'acquisition du Soleil », on entend une phase au cours de laquelle l'engin spatial est commandé de sorte à placer ledit engin spatial dans une orientation d'acquisition dans laquelle l'axe Y est sensiblement orthogonal à la direction D_{S} du Soleil par rapport à l'engin spatial. En particulier, la présente invention trouve une application particulièrement avantageuse dans le cas d'une phase d'acquisition initiale du Soleil par l'engin spatial (immédiatement après séparation avec un lanceur de l'engin spatial) ou encore d'une phase d'acquisition du Soleil en mode survie de l'engin spatial.

Dans la suite de la description, on se place de manière non limitative dans le cas où l'engin spatial est un satellite 10 et dans le cas d'une phase d'acquisition initiale du Soleil par le satellite 10. Il est à noter en outre que l'invention est applicable quelle que soit l'orbite LEO, MEO, GEO, etc., sur laquelle le satellite 10 est destiné à effectuer sa mission. La présente invention trouve une application particulièrement avantageuse, notamment, dans le cas d'un satellite 10 placé en orbite GTO par un lanceur et destiné à effectuer sa mission en orbite GEO,

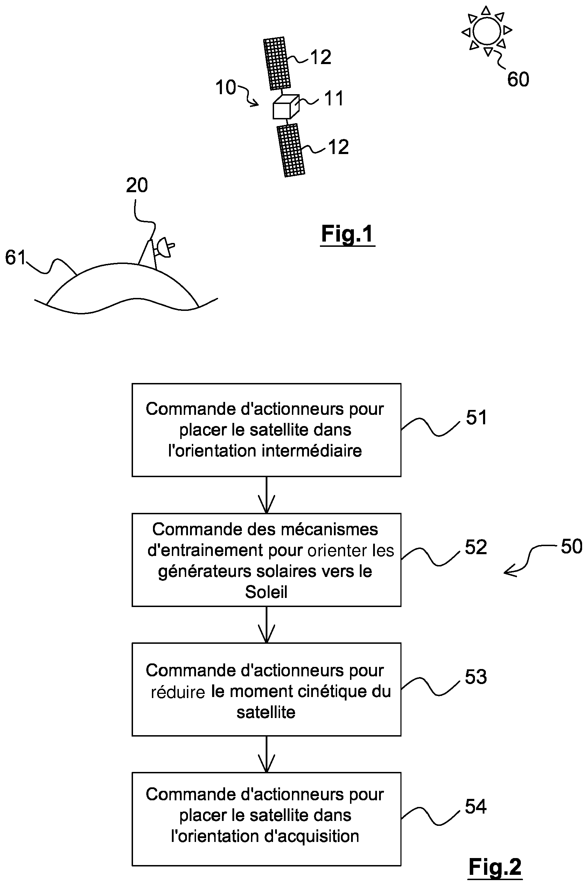

La figure 1 représente schématiquement un système spatial comportant un satellite 10 devant exécuter une phase d'acquisition initiale du Soleil 60, après séparation avec un lanceur (non représenté sur les figures).

Tel qu'illustré par la figure 1, le satellite 10 comporte un corps 11, et deux générateurs solaires 12 de part et d'autre du corps 11, et un ensemble d'actionneurs (non représentés sur les figures) adaptés à contrôler l'orbite du satellite et à contrôler l'attitude du satellite, de préférence suivant trois axes.

Les générateurs solaires 12 comportent des surfaces photosensibles respectives, par exemple planes, qui lorsqu'elles sont dirigées vers le Soleil génèrent de la puissance électrique. Afin de contrôler l'orientation desdites surfaces photosensibles par rapport au Soleil, les générateurs solaires 12 sont mobiles en rotation autour d'un même axe Y, autour duquel lesdits générateurs solaires 12 sont entrainés par des mécanismes d'entrainement respectifs.

Il est à noter que les générateurs solaires 12 sont représentés déployés sur la figure 1 mais que, immédiatement après séparation avec le lanceur, lesdits générateurs solaires 12 sont généralement repliés. En outre, le satellite 10 illustré sur la figure 1 comporte deux générateurs solaires 12, mais l'invention est applicable dès lors que ledit satellite 10 comporte au moins un générateur solaire 12 mobile en rotation autour d'un axe Y.

Le système spatial comporte également un dispositif 20 de commande de la phase d'acquisition initiale du Soleil 60 par le satellite 10. Dans l'exemple non limitatif illustré par la figure 1, le dispositif 20 de commande est distant du satellite 10, et correspond à une station sol à la surface de la Terre 61.

De manière plus générale, le dispositif 20 de commande peut être embarqué dans le satellite 10 ou dans un ou plusieurs équipements distants dudit satellite 10. Rien n'exclut en outre, suivant d'autres exemples, d'avoir un dispositif 20 de commande distribué entre le satellite 10 et un ou plusieurs autres équipements distants dudit satellite 10.

Dans l'exemple illustré par la figure 1, le dispositif 20 de commande pilote donc à distance la phase d'acquisition initiale du Soleil par le satellite 10, et le dispositif 20 de commande et le satellite 10 comportent à cet effet des moyens conventionnels respectifs de communication à distance.

Le dispositif 20 de commande est adapté à déterminer des signaux de commande de la phase d'acquisition initiale du Soleil, qui sont envoyés au satellite 10. Lesdits signaux de commande sont par exemple déterminés en fonction de signaux de mesure reçus du satellite 10 qui sont déterminés par différents capteurs (gyroscope, gyromètre, accéléromètre, senseur stellaire, etc.) dudit satellite 10,

Le dispositif 20 de commande comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé 50 de commande. Dans une variante, le dispositif 20 de commande comporte également un ou des circuits logiques programmables, de type FPGA, PLD, etc., et/ou circuits intégrés spécialisés (ASIC) adaptés à mettre en oeuvre tout ou partie desdites étapes du procédé 50 de commande.

En d'autres termes, le dispositif 20 de commande comporte un ensemble de moyens configurés de façon logicielle (produit programme d'ordinateur spécifique) et/ou matérielle (FPGA, PLD, ASIC, etc.) pour mettre en oeuvre les différentes étapes d'un procédé 50 de commande décrit ci-après.

La figure 2 représente les principales étapes d'un procédé 50 de commande de phase d'acquisition initiale du Soleil par le satellite 10, ledit satellite 10 ayant, immédiatement après séparation avec le lanceur, un moment cinétique non nul dont l'axe D_{H} peut être estimé au moyen de capteurs conventionnels adaptés (gyroscope, senseur stellaire, etc.).

Tel qu'illustré par la figure 2, les principales étapes d'un procédé 50 de commande selon l'invention sont :
- 51 de commande d'actionneurs du satellite 10 de sorte à placer ledit satellite 10 dans une orientation intermédiaire, par rapport au moment cinétique, correspondant à une orientation dudit satellite 10 dans laquelle l'axe Y de rotation des générateurs solaires 12 est sensiblement orthogonal à l'axe D_{H} du moment cinétique,
- 52 commande du mécanisme d'entrainement des générateurs solaires 12, préalablement au moins partiellement déployés, de sorte à orienter lesdits générateurs solaires vers le Soleil.

Par « générateur solaire au moins partiellement déployé », on entend qu'au moins une partie de la surface photosensible dudit générateur solaire est à la fois mobile en rotation autour de l'axe Y et disponible pour générer de la puissance électrique. Par exemple, si la surface photosensible d'un générateur solaire est répartie sur plusieurs panneaux initialement repliés les uns sur les autres, ledit générateur solaire peut éventuellement être progressivement déployé, en dépliant successivement les différents panneaux.

Après que le satellite 10 a été placé dans l'orientation intermédiaire et après que les générateurs solaires 12, au moins partiellement déployés, ont été orientés vers le Soleil, le procédé 50 commande comporte des étapes de :
- 53 commande d'actionneurs du satellite 10 de sorte à réduire le moment cinétique dudit satellite 10,
- 54 commande d'actionneurs du satellite 10 de sorte à placer ledit satellite 10 dans une orientation d'acquisition, par rapport au Soleil, correspondant à une orientation dudit satellite 10 dans laquelle l'axe Y est sensiblement orthogonal à la direction D_{S} du Soleil par rapport audit satellite 10.

### Placement du satellite dans l'orientation intermédiaire

Au cours de l'étape 51 de placement du satellite 10 dans l'orientation intermédiaire, on ne cherche pas nécessairement à modifier le moment cinétique du satellite 10 en repère inertiel, mais bien à modifier l'orientation dudit satellite 10 par rapport à l'axe D_{H} dudit moment cinétique, de sorte à rendre l'axe Y sensiblement orthogonal à l'axe D_{H}.

Il est à noter qu'on entend ici par « sensiblement orthogonal » que l'angle de consigne β entre les éléments comparés (l'axe Y et l'axe D_{H} dans le cas ci-dessus) est tel que |sin β| > 0.9. Il est cependant à noter que le cas où l'angle de consigne β est tel que |sin β| = 1 (angle de consigne visant à obtenir des éléments strictement orthogonaux aux erreurs près) correspond à un mode préféré de mise en oeuvre. De manière analogue, dans la suite de la description, on entend par « sensiblement parallèle » que l'angle de consigne β entre les éléments comparés est tel que |cos β| > 0.9, le cas où l'angle de consigne β est tel que |cos β| = 1 (angle de consigne visant à obtenir des éléments strictement parallèles aux erreurs près) correspondant alors à un mode préféré de mise en oeuvre.

Il est à noter que le moment cinétique initial (y compris l'axe D_{H}) est en principe inertiel, c'est-à-dire invariant en l'absence de couples externes sur le satellite 10. Ainsi, une fois le satellite 10 placé dans l'orientation intermédiaire, il n'est en principe pas nécessaire d'actualiser ladite orientation intermédiaire. Dans le cas où le moment cinétique initial ne serait pas inertiel, il est alors avantageux, si l'axe D_{H} varie de façon importante, d'actualiser l'orientation intermédiaire du satellite 10 afin de suivre les variations de l'axe D_{H} et maintenir l'axe Y sensiblement orthogonal à l'axe D_{H} du moment cinétique.

Par exemple, si l'axe Y correspond à l'axe d'inertie minimale du satellite 10, alors le placement du satellite 10 dans l'orientation intermédiaire consiste à aligner l'axe d'inertie maximale dudit satellite 10 avec l'axe D_{H} du moment cinétique. Cela correspond, pour l'homme du métier, à un passage forcé en « flat spin », par amortissement de la nutation du satellite 10 par rapport à l'axe D_{H} du moment cinétique. Si nécessaire, les générateurs solaires 12 peuvent être au moins partiellement déployés pendant ou préalablement au placement du satellite 10 dans l'orientation intermédiaire, afin d'assurer que l'axe Y est bien l'axe d'inertie minimale dudit satellite 10.

De manière plus générale, l'axe Y n'est pas nécessairement l'axe d'inertie minimale du satellite 10. Par exemple, si l'axe Y est l'axe d'inertie maximale, alors le placement du satellite 10 dans l'orientation intermédiaire consiste à aligner l'axe d'inertie minimale dudit satellite 10 avec l'axe D_{H} du moment cinétique, par un contrôle adapté de la nutation dudit satellite 10 par rapport à l'axe D_{H} dudit satellite 10.

Une telle modification de l'orientation du satellite 10 par rapport à l'axe D_{H} peut être effectuée indépendamment du moment cinétique, par tout type d'actionneur adapté (chimique ou électrique), y compris par des actionneurs inertiels dont la capacité est inférieure audit moment cinétique.

Dans un mode préféré de mise en oeuvre, le placement du satellite 10 dans l'orientation intermédiaire est effectué au moyen d'actionneurs inertiels dudit satellite 10, tels que des actionneurs gyroscopiques et/ou des roues de réaction dudit satellite 10. La commande desdits actionneurs inertiels, pour contrôler la nutation du satellite 10 (alignement de l'axe D_{H} avec l'axe d'inertie maximale ou avec l'axe d'inertie minimale dudit satellite 10), peut mettre en oeuvre des procédés connus de l'homme de l'art, par exemple le procédé décrit dans le brevet US6382565.

### Orientation des générateurs solaires

Lorsque le satellite 10 est placé dans l'orientation intermédiaire, les générateurs solaires 12, préalablement au moins partiellement déployés, sont orientés vers le Soleil. On entend ici par « orientés vers le Soleil » que lesdits générateurs solaires 12 sont placés dans des orientations respectives permettant d'optimiser l'ensoleillement des surfaces photosensibles desdits générateurs solaires 12 sur la durée d'une rotation complète du satellite 10 sur lui-même. Par exemple, les générateurs solaires 12 au moins partiellement déployés sont placés dans des orientations respectives permettant d'assurer que l'ensoleillement moyen des surfaces photosensibles desdits générateurs solaires 12, sur la durée d'une rotation complète du satellite sur lui-même, est supérieur à une valeur seuil prédéfinie.

Tel qu'indiqué précédemment, dans l'orientation intermédiaire, l'axe Y de rotation des générateurs solaires 12 est sensiblement orthogonal à l'axe D_{H} du moment cinétique. Une telle orientation du satellite 10 est particulièrement avantageuse en ce que, bien que l'attitude du satellite 10 ne soit pas stabilisée suivant trois axes, il est néanmoins toujours possible de trouver des orientations respectives des générateurs solaires 12 permettant d'assurer l'autonomie électrique du satellite 10, tel que décrit ci-après.

Les orientations respectives des générateurs solaires 12 sont par exemple déterminées en fonction de l'angle entre la direction D_{S} du Soleil et l'axe D_{H} du moment cinétique, dit « angle de dépointage θ ».

Les orientations des générateurs solaires 12 sont par exemple maintenues fixes tant que l'axe D_{H} du moment cinétique ne varie pas, ce qui permet d'avoir une commande simple des générateurs solaires 12 et de limiter l'utilisation des mécanismes d'entrainement tant que le moment cinétique du satellite n'a pas été réduit. Rien n'exclut cependant, suivant d'autres exemples, de faire varier les orientations respectives des générateurs solaires 12 au cours du temps, même si l'axe D_{H} ne varie pas, pour tenir compte de la rotation du satellite 10, afin par exemple de maximiser l'ensoleillement instantané de la surface photosensible d'au moins un générateur solaire 12.

Dans la suite de la description, on se place de manière non limitative dans le cas où l'orientation des générateurs solaires 12 est maintenue fixe tant que l'axe D_{H} du moment cinétique ne varie pas.

On désigne par « direction de pointage » de la surface photosensible d'un générateur solaire 12, un vecteur normal à ladite surface photosensible, orienté du côté dudit générateur solaire 12 duquel doit se trouver le Soleil pour générer de la puissance électrique.

Dans un mode particulier de mise en oeuvre, les générateurs solaires sont maintenus, au cours de la réduction du moment cinétique, de sorte que la direction de pointage de la surface photosensible de chaque générateur solaire 12 est :
- sensiblement orthogonale à l'axe D_{H} du moment cinétique (en d'autres termes, ladite surface photosensible est sensiblement parallèle à l'axe D_{H}) lorsque |cos θ| < V_{S1}, V_{S1} étant une valeur seuil prédéfinie, de préférence comprise entre 0.3 et 0.6,
- sensiblement parallèle à l'axe D_{H} (en d'autres termes, ladite surface photosensible est sensiblement orthogonale à l'axe D_{H}) lorsque |cos θ| > V_{S1}, ladite surface photosensible étant orientée du côté du Soleil.

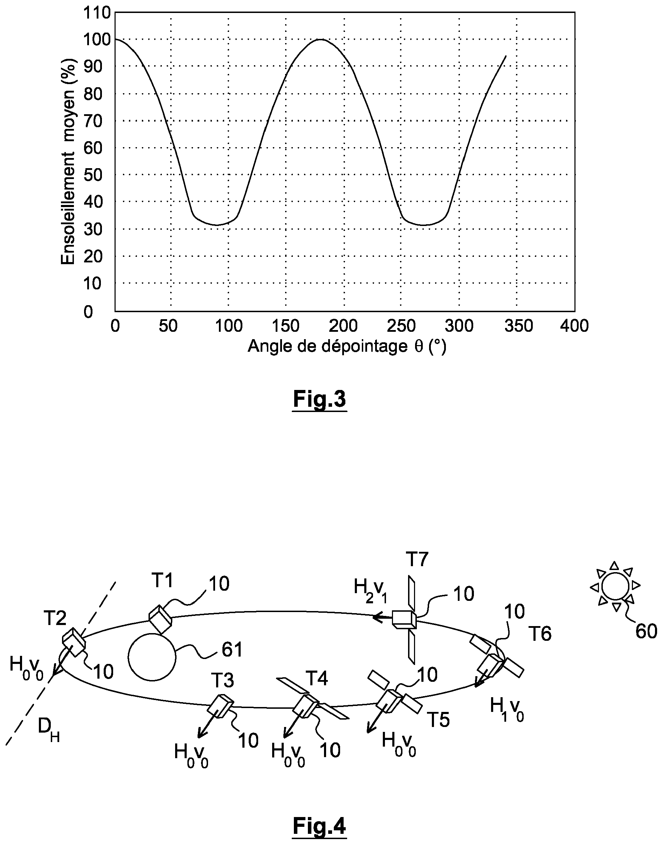

La figure 3 représente l'ensoleillement moyen obtenu, en fonction de l'angle de dépointage θ, sur la durée d'une rotation complète du satellite 10 sur lui-même, en considérant la valeur seuil V_{S1} égale à environ 0.34 et en considérant l'axe Y et l'axe D_{H} strictement orthogonaux.

Avec une telle commande des générateurs solaires 12 lorsque le satellite 10 est dans l'orientation intermédiaire, l'ensoleillement moyen des surfaces photosensibles des générateurs solaires 12 ne dépend que de l'angle de dépointage θ.

En particulier, lorsque |cos θ| > V_{S1}, l'ensoleillement moyen desdites surfaces photosensibles varie en |cos θ| (chaque surface photosensible étant sensiblement orthogonale à l'axe D_{H}, l'angle de dépointage θ correspond alors à l'écart de l'angle d'incidence des rayons du Soleil sur les surfaces photosensibles par rapport à l'incidence normale). En outre, on constate que l'ensoleillement moyen des surfaces photosensibles des générateurs solaires 12 est toujours supérieur à 30%.

L'ensoleillement moyen des surfaces photosensibles des générateurs solaires 12 sera le plus souvent inférieur à l'ensoleillement optimal qui peut être obtenu lorsque le satellite 10 est dans l'orientation d'acquisition. Toutefois, un tel ensoleillement moyen est suffisant pour assurer l'autonomie électrique du satellite 10 dans le sens où il est toujours possible de recharger les batteries dudit satellite 10 en désactivant si nécessaire les équipements qui consomment le plus de puissance électrique.

Dans un mode préféré de mise en oeuvre, lesdits générateurs solaires 12 sont maintenus, au cours de la réduction du moment cinétique, de sorte que les surfaces photosensibles respectives desdits générateurs solaires 12 sont sensiblement parallèles à l'axe D_{H} du moment cinétique, et avec des directions de pointage respectives opposées lorsque |cos θ| < V_{S2}, V_{S2} étant une valeur seuil prédéfinie. La valeur seuil V_{S2} est de préférence comprise entre 0.1 et 0.6, voire comprise entre 0.3 et 0.6. Dans des modes particuliers de mise en oeuvre, les valeurs seuil V_{S1} et V_{S2} sont égales.

En considérant par exemple que l'axe D_{H} du moment cinétique est orthogonal à la direction D_{S} du Soleil (|cos θ| = 0), du fait que les directions de pointage respectives des surfaces photosensibles sont opposées, il existe toujours une surface photosensible orientée du côté du Soleil et une surface photosensible orientée du côté opposé au Soleil. Si au contraire les surfaces photosensibles des générateurs solaires 12 étaient orientées du même côté du satellite 10, les deux surfaces photosensibles seraient simultanément :
- toutes deux orientées du côté du Soleil, pendant la moitié de la durée de la rotation complète du satellite 10 sur lui-même,
- toutes deux orientées du côté opposé au Soleil, pendant la moitié de la durée de ladite rotation complète.

De telles dispositions permettent par conséquent de limiter les fluctuations de l'ensoleillement instantané des générateurs solaires 12 autour de l'ensoleillement moyen sur la durée d'une rotation complète du satellite 10 sur lui-même.

Il est à noter que le déploiement des générateurs solaires 12 peut être effectué avant, pendant ou après le placement du satellite 10 dans l'orientation intermédiaire. De même, l'orientation des générateurs solaires 12 peut être effectuée, si elle ne dépend que de l'angle de dépointage θ, après que l'axe D_{H} a été estimé, avant, pendant ou après le placement du satellite 10 dans l'orientation intermédiaire.

Par conséquent, les générateurs solaires 12 peuvent commencer à fournir de la puissance électrique avant d'avoir commencé à réduire le moment cinétique du satellite 10. Grâce à l'orientation intermédiaire du satellite 10 (dans laquelle l'axe Y est sensiblement orthogonal à l'axe D_{H}), il est possible d'assurer un ensoleillement moyen des surfaces sensibles des générateurs solaires 12 d'au moins 30% sur la durée d'une rotation complète du satellite 10 sur lui-même. Un tel ensoleillement moyen est suffisant pour assurer l'autonomie électrique du satellite 10 au cours du temps, et pendant toute la durée de la phase d'acquisition initiale du Soleil. Par conséquent, il est possible de mettre en oeuvre des actionneurs électriques, notamment des propulseurs électriques, pour réduire ensuite le moment cinétique du satellite 10. Le cas échéant, les actionneurs électriques peuvent être activés de façon discontinue, afin de pouvoir recharger les batteries du satellite 10 entre deux activations successives desdits actionneurs électriques, lorsque lesdits actionneurs électriques sont désactivés.

Ceci est rendu possible par un déploiement des générateurs solaires 12 avant de réduire le moment cinétique du satellite 10. Les générateurs solaires 12 peuvent être entièrement déployés, ou n'être déployés que partiellement, en particulier si le moment cinétique initial est très important. Dans le cas où les générateurs solaires 12 ne sont que partiellement déployés, ils peuvent par exemple être déployés progressivement, à mesure que le moment cinétique du satellite 10 diminue, ou bien déployés complètement après que le moment cinétique du satellite 10 a été réduit. Si le moment cinétique initial est trop important, il peut être envisagé d'effectuer une réduction partielle du moment cinétique avant d'avoir déployé les générateurs solaires 12 (le cas échéant dans la limite de la capacité des batteries du satellite 10). L'essentiel de la réduction du moment cinétique se poursuit toutefois après déploiement au moins partiel desdits générateurs solaires 12, l'autonomie électrique dudit satellite 10 étant alors assurée.

### Réduction du moment cinétique du satellite

Ensuite, des actionneurs du satellite 10 sont mis en oeuvre pour réduire le moment cinétique du satellite 10. Par « réduire le moment cinétique » du satellite 10, on entend diminuer le module dudit moment cinétique, de préférence jusqu'à atteindre une valeur seuil prédéfinie. La réduction du moment cinétique du satellite 10 est de préférence effectuée en maintenant ledit satellite 10 dans l'orientation intermédiaire, c'est-à-dire en maintenant l'axe Y sensiblement orthogonal à l'axe D_{H} du moment cinétique. La commande des actionneurs du satellite 10, pour réduire le moment cinétique du satellite 10, peut être effectuée de manière conventionnelle.

Tel qu'indiqué précédemment, l'autonomie électrique du satellite 10 est assurée par le placement dudit satellite 10 dans l'orientation intermédiaire et par le déploiement au moins partiel des générateurs solaires 12.

Dans un mode préféré de mise en oeuvre, la réduction du moment cinétique du satellite 10, placé dans l'orientation intermédiaire, met en oeuvre des propulseurs électriques (plasmiques) dudit satellite 10. En effet, l'autonomie électrique du satellite 10 étant assurée, les propulseurs électriques peuvent être mis en oeuvre malgré les inconvénients susmentionnés (indisponibilité les premiers jours, faible capacité en couple, forte consommation électrique). Rien n'exclut cependant de mettre en oeuvre d'autres actionneurs du satellite 10 pour réduire le moment cinétique du satellite 10, en complément ou alternativement aux propulseurs électriques. Par exemple, dans le cas d'un satellite 10 en orbite LEO, il est possible de mettre en oeuvre des magnéto-coupleurs. Suivant un autre exemple, il est possible de mettre en oeuvre des propulseurs chimiques, lesquels peuvent avoir une capacité en couple inférieure à ceux mis en oeuvre dans l'art antérieur dans la mesure où, l'autonomie électrique du satellite 10 étant assurée, il n'est plus nécessaire de placer rapidement le satellite 10 dans l'orientation d'acquisition.

La réduction de moment cinétique est de préférence effectuée sans modifier l'axe D_{H} du moment cinétique. Rien n'exclut cependant de modifier également l'axe D_{H}, par exemple pour commencer à placer le satellite 10 dans l'orientation d'acquisition. Dans un tel cas, il est alors avantageux, si l'axe D_{H} varie de façon importante, d'actualiser l'orientation intermédiaire du satellite 10 afin de suivre les variations de l'axe D_{H} et, si nécessaire, l'orientation des générateurs solaires 12.

### Placement du satellite dans l'orientation d'acquisition

Simultanément à et/ou après la réduction du moment cinétique, le satellite 10 est placé dans l'orientation d'acquisition, par rapport au Soleil, dans laquelle l'axe Y des générateurs solaires 12 est sensiblement orthogonal à la direction D_{S} du Soleil par rapport au satellite 10.

Dans la suite de la description, on se place de manière non limitative dans le cas où le placement du satellite 10 dans l'orientation d'acquisition correspond à une stabilisation de l'attitude du satellite 10 suivant trois axes.

Rien n'exclut cependant, suivant d'autres exemples, d'avoir dans l'orientation d'acquisition une vitesse de rotation non nulle du satellite 10. Le cas échéant, l'axe D_{H} du moment cinétique est modifié de sorte à être rendu sensiblement parallèle à la direction D_{S} du Soleil par rapport au satellite 10 tout en conservant l'axe Y sensiblement orthogonal à l'axe D_{H}, de sorte que l'axe Y est sensiblement orthogonal à la direction D_{S} du Soleil sur toute la durée de la rotation du satellite 10 sur lui-même.

Le placement du satellite 10 dans l'orientation d'acquisition peut mettre en oeuvre tout type d'actionneur adapté. L'autonomie électrique du satellite 10 au cours du temps étant assurée, le placement du satellite 10 dans l'orientation d'acquisition met de préférence en oeuvre des actionneurs électriques. Les actionneurs mis en oeuvre peuvent être les mêmes que ceux mis en oeuvre pour réduire le moment cinétique du satellite 10, ou bien d'autres actionneurs.

Dans un mode préféré de mise en oeuvre, le placement du satellite 10 dans l'orientation d'acquisition met en oeuvre des actionneurs inertiels dudit satellite 10, de préférence des actionneurs gyroscopiques et/ou des roues de réaction du satellite 10. La commande des actionneurs inertiels du satellite 10, pour placer ledit satellite 10 dans l'orientation d'acquisition, peut être effectuée de manière conventionnelle. Par exemple, les actionneurs inertiels peuvent être mis en oeuvre lorsque le module du moment cinétique dudit satellite 10 devient inférieur à une valeur seuil prédéfinie, égale ou inférieure à la capacité desdits actionneurs inertiels.

Lorsque le satellite 10 se trouve dans l'orientation d'acquisition, les générateurs solaires 12 sont de préférence orientés de sorte que les rayons du Soleil ont une incidence sensiblement normale sur les surfaces photosensibles des générateurs solaires, afin de maximiser la puissance électrique générée.

La figure 4 représente schématiquement un exemple non limitatif de mise en oeuvre d'une phase d'acquisition initiale du Soleil 60 selon l'invention :
- à l'instant T1 : le satellite 10 vient d'être séparé du lanceur avec un moment cinétique inertiel égal à H₀·v₀, expression dans laquelle v₀ est un vecteur unitaire de l'axe D_{H} à l'instant T1 et H₀ est le module du moment cinétique à l'instant T1,
- à l'instant T2 : le moment cinétique H₀·v₀ a été estimé au moyen de capteurs du satellite 10,
- à l'instant T3 : le satellite 10 a été placé dans l'orientation intermédiaire, avec un moment cinétique toujours égal à H₀·v₀,
- à l'instant T4 : les générateurs solaires 12 du satellite 10 ont été déployés (entièrement déployés dans l'exemple non limitatif illustré par la figure 4),
- à l'instant T5 : les générateurs solaires 12 ont été orientés vers le Soleil 60, les surfaces photosensibles étant, dans l'exemple représenté, sensiblement parallèles à l'axe D_{H},
- à l'instant T6 : le moment cinétique a été réduit à axe D_{H} constant, de sorte que le moment cinétique est égal à H₁·v₀, expression dans laquelle H₁ < H₀ est le module du moment cinétique à l'instant T6,
- à l'instant T7 : le satellite 10 a été placé dans l'orientation d'acquisition tout en continuant à diminuer le moment cinétique, l'axe D_{H} passe à présent sensiblement par le Soleil 60 et le moment cinétique est égal à H₂·v₁, expression dans laquelle H₂ < H₁ est le module du moment cinétique à l'instant T7 et v₁ est un vecteur unitaire de l'axe D_{H} à l'instant T7.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant une phase d'acquisition initiale du Soleil. Tel qu'indiqué précédemment, l'invention est également applicable à d'autres phases d'acquisition du Soleil. Notamment, l'invention est applicable à la phase d'acquisition du Soleil en mode survie, pour laquelle les observations précédentes restent valables, à l'exception que les générateurs solaires 12 du satellite 10 sont alors déjà déployés avant le début de la phase d'acquisition du Soleil en mode survie.

En outre, un procédé 50 de commande de phase d'acquisition selon l'invention peut être combiné à d'autres procédés de commande. Notamment, un procédé 50 de commande selon l'invention peut n'être mis en oeuvre que si le moment cinétique initial est très important. Ainsi, en considérant que seuls des actionneurs électriques sont mis en oeuvre, la commande de la phase d'acquisition peut être adaptée en fonction du moment cinétique initial :
- si le moment cinétique initial est dans la capacité des actionneurs inertiels du satellite 10 : les actionneurs inertiels sont mis en oeuvre pour réduire le moment cinétique dudit satellite 10,
- si le moment cinétique initial n'est pas dans la capacité des actionneurs inertiels, mais est dans la capacité conjointe des propulseurs électriques et des batteries du satellite 10: les propulseurs électriques sont mis en oeuvre pour réduire le moment cinétique dudit satellite 10,
- si le moment cinétique initial n'est pas dans la capacité des actionneurs inertiels, et n'est pas dans la capacité conjointe des propulseurs électriques et des batteries du satellite 10 : un procédé 50 de commande selon l'invention est alors exécuté.

La description ci-avant illustre clairement que par ses différentes caractéristiques et leurs avantages, la présente invention atteint les objectifs qu'elle s'était fixés. En particulier, du fait que l'autonomie électrique du satellite 10 est assurée en plaçant ledit satellite 10 dans l'orientation intermédiaire et en orientant de manière adaptée les générateurs solaires 12, la phase d'acquisition du Soleil peut ne mettre en oeuvre que des actionneurs électriques. Par conséquent, la solution proposée est applicable notamment dans le cas d'un satellite dépourvu de propulseur chimique.

## Revendications

1. Procédé (50) de commande d'une phase d'acquisition du Soleil par un engin spatial (10) avec un moment cinétique non nul d'axe D_{H}, ledit engin spatial comportant un corps, un générateur solaire (12) et un mécanisme d'entrainement dudit générateur solaire en rotation autour d'un axe Y, **caractérisé en ce qu'**il comporte des étapes de :
- (51) commande d'actionneurs de l'engin spatial (10) de sorte à placer ledit engin spatial dans une orientation intermédiaire, par rapport au moment cinétique, dans laquelle l'axe Y est sensiblement orthogonal à l'axe D_{H} du moment cinétique,
- (52) commande du mécanisme d'entrainement du générateur solaire (12), préalablement au moins partiellement déployé, de sorte à orienter ledit générateur solaire vers le Soleil,
et **en ce qu'**il comporte, après que l'engin spatial (10) a été placé dans l'orientation intermédiaire et après que le générateur solaire (12) a été orienté vers le Soleil, des étapes de :
- (53) commande d'actionneurs de l'engin spatial (10) de sorte à réduire le moment cinétique dudit engin spatial,
- (54) commande d'actionneurs de l'engin spatial (10) de sorte à placer ledit engin spatial dans une orientation d'acquisition, par rapport au Soleil, dans laquelle l'axe Y est sensiblement orthogonal à la direction D_{S} du Soleil par rapport à l'engin spatial.

2. Procédé (50) selon la revendication 1, **caractérisé en ce que** le placement de l'engin spatial (10) dans l'orientation intermédiaire met en oeuvre des actionneurs inertiels dudit engin spatial, de préférence des actionneurs gyroscopiques et/ou des roues de réaction.

3. Procédé (50) selon l'une des revendications 1 à 2, **caractérisé en ce que** le placement de l'engin spatial (10) dans l'orientation d'acquisition met en oeuvre des actionneurs inertiels dudit engin spatial, de préférence des actionneurs gyroscopiques et/ou des roues de réaction.

4. Procédé (50) selon la revendication 3, **caractérisé en ce que** les actionneurs inertiels sont mis en oeuvre, pour placer l'engin spatial (10) dans l'orientation d'acquisition, lorsque le moment cinétique dudit engin spatial est inférieur à une valeur seuil prédéfinie.

5. Procédé (50) selon l'une des revendications précédentes, **caractérisé en ce que** la réduction du moment cinétique de l'engin spatial (10), placé dans l'orientation intermédiaire, met en oeuvre des propulseurs électriques dudit engin spatial.

6. Procédé (50) selon l'une des revendications précédentes, **caractérisé en ce que** seuls des actionneurs électriques sont mis en oeuvre au cours de la phase d'acquisition du Soleil.

7. Procédé (50) selon l'une des revendications précédentes, **caractérisé en ce que**, l'axe d'inertie maximale de l'engin spatial (10), lorsque le générateur solaire dudit engin spatial est déployé, étant orthogonal à l'axe Y, le générateur solaire (12) est au moins partiellement déployé préalablement au placement de l'engin spatial (10) dans l'orientation intermédiaire et, au cours du placement dudit engin spatial dans ladite orientation intermédiaire, on effectue un amortissement de nutation.

8. Procédé (50) selon l'une des revendications 1 à 6, **caractérisé en ce que**, l'axe d'inertie minimale de l'engin spatial (10) étant orthogonal à l'axe Y, on effectue, au cours du placement dudit engin spatial dans ladite orientation intermédiaire, un contrôle de nutation visant à aligner l'axe d'inertie minimale dudit satellite avec l'axe D_{H} du moment cinétique.

9. Procédé (50) selon l'une des revendications précédentes, **caractérisé en ce que** l'orientation du générateur solaire (12) au cours de la réduction du moment cinétique est déterminée en fonction de l'angle entre la direction D_{S} du Soleil et l'axe D_{H} du moment cinétique, dit « angle de dépointage θ ».

10. Procédé (50) selon la revendication 9, **caractérisé en ce que** l'orientation du générateur solaire (12) est maintenue fixe par rapport au corps de l'engin spatial (10) au cours de la réduction du moment cinétique.

11. Procédé (50) selon la revendication 10, **caractérisé en ce que** le générateur solaire (12) est maintenu, au cours de la réduction du moment cinétique, de sorte qu'une surface photosensible dudit générateur solaire est :
- sensiblement parallèle à l'axe D_{H} du moment cinétique lorsque |cos θ| < V_{S1}, V_{S1} étant une valeur seuil prédéfinie,
- sensiblement orthogonale à l'axe D_{H} lorsque |cos θ| > V_{S1}, ladite surface photosensible étant orientée du côté du Soleil.

12. Procédé (50) selon l'une des revendications 10 à 11, **caractérisé en ce que**, l'engin spatial (10) comportant deux générateurs solaires (12) montés sur des mécanismes d'entrainement respectifs adaptés à faire tourner lesdits générateurs solaires autour d'axes Y respectifs parallèles, lesdits générateurs solaires sont maintenus, au cours de la réduction du moment cinétique, de sorte que des surfaces photosensibles respectives desdits générateurs solaires sont sensiblement parallèles à l'axe D_{H} du moment cinétique et avec des directions de pointage respectives opposées lorsque |cos θ| < V_{S2}, V_{S2} étant une valeur seuil prédéfinie.

13. Procédé (50) selon l'une des revendications précédentes, **caractérisé en ce que** la phase d'acquisition du Soleil par l'engin spatial (10) est commandée à distance par un dispositif (20) de commande, des signaux de commande étant successivement déterminés et envoyés à l'engin spatial par ledit dispositif de commande.

14. Produit programme d'ordinateur **caractérisé en ce qu'**il comporte un ensemble d'instructions de code de programme qui, lorsqu'elles sont exécutées par un processeur, mettent en oeuvre un procédé (50) de commande d'une phase d'acquisition du Soleil par un engin spatial (10) selon l'une des revendications précédentes.

15. Dispositif (20) de commande d'une phase d'acquisition du Soleil par un engin spatial (10) avec un moment cinétique non nul d'axe D_{H}, ledit engin spatial comportant un corps, des actionneurs, un générateur solaire (12) et un mécanisme d'entrainement dudit générateur solaire en rotation autour d'un axe Y, **caractérisé en ce qu'**il comporte des moyens configurés pour commander ledit engin spatial (10) conformément à l'une des revendications 1 à 13.

16. Système spatial comportant un engin spatial (10) comportant un corps, des actionneurs, un générateur solaire (12) et un mécanisme d'entrainement dudit générateur solaire en rotation autour d'un axe Y, **caractérisé en ce qu'**il comporte un dispositif de commande d'une phase d'acquisition du Soleil par ledit engin spatial (10) conforme à la revendication 15.

## Patentansprüche

1. Verfahren (50) zur Steuerung einer Phase zum Erfassen der Sonne durch ein Raumfahrzeug (10) mit einem kinetischen Moment von ungleich Null zur Achse D_{H}, wobei das Raumfahrzeug einen Körper, einen Solargenerator (12) und einen Mechanismus zum Versetzen des Solargenerators in Drehung um eine Achse Y aufweist, **dadurch gekennzeichnet, dass** es die folgenden Schritte aufweist:
- (51) Ansteuerung von Stellgliedern des Raumfahrzeugs (10), so dass das Raumfahrzeug in einer zwischenzeitlichen Ausrichtung in Bezug auf das kinetische Moment angeordnet wird, bei welcher die Achse Y im Wesentlichen senkrecht auf der Achse D_{H} des kinetischen Moments steht,
- (52) Ansteuerung des Antriebsmechanismus des Solargenerators (12), bevor er zumindest teilweise entfaltet ist, so dass der Solargenerator in Richtung auf die Sonne ausgerichtet wird,
und dass es, nachdem das Raumfahrzeug (10) in der zwischenzeitlichen Ausrichtung angeordnet worden ist und nachdem der Solargenerator (12) in Richtung auf die Sonne ausgerichtet worden ist, folgende Schritte aufweist:
- (53) Ansteuerung von Stellgliedern des Raumfahrzeugs (10), so dass das kinetische Moment des Raumfahrzeugs reduziert wird,
- (54) Ansteuerung von Stellgliedern des Raumfahrzeugs (10), so dass das Raumfahrzeug in eine Erfassungsausrichtung in Bezug auf die Sonne gebracht wird, bei welcher die Achse Y im Wesentlichen senkrecht auf der Richtung D_{S} der Sonne in Bezug auf das Raumfahrzeug steht.

2. Verfahren (50) nach Anspruch 1, **dadurch gekennzeichnet, dass** das Anordnen des Raumfahrzeugs (10) in die zwischenzeitliche Ausrichtung Trägheitsstellglieder des Raumfahrzeugs, vorzugsweise gyroskopische Stellglieder und / oder Schwungräder, zum Einsatz bringt.

3. Verfahren (50) nach einem der Ansprüche 1 bis 2, **dadurch gekennzeichnet, dass** das Anordnen des Raumfahrzeugs (10) in die Erfassungsausrichtung Trägheitsstellglieder des Raumfahrzeugs, vorzugsweise gyroskopische Stellglieder und / oder Schwungräder, zum Einsatz bringt.

4. Verfahren (50) nach Anspruch 3, **dadurch gekennzeichnet, dass** die Trägheitsstellglieder zum Einsatz gebracht werden, um das Raumfahrzeug (10) in der Erfassungsausrichtung anzuordnen, wenn das kinetische Moment des Raumfahrzeugs kleiner als ein vordefinierter Schwellenwert ist.

5. Verfahren (50) nach einem der vorhergehenden Ansprüche, **dadurch gekennzeichnet, dass** das Reduzieren des kinetischen Moments des Raumfahrzeugs (10), welches in die zwischenzeitliche Ausrichtung gebracht ist, elektrische Antriebe des Raumfahrzeugs zum Einsatz bringt.

6. Verfahren (50) nach einem der vorhergehenden Ansprüche, **dadurch gekennzeichnet, dass** im Verlauf der Phase zum Erfassen der Sonne nur elektrische Stellglieder zum Einsatz gebracht werden.

7. Verfahren (50) nach einem der vorhergehenden Ansprüche, **dadurch gekennzeichnet, dass** die maximale Trägheitsachse des Raumfahrzeugs (10), wenn der Solargenerator des Raumfahrzeugs entfaltet ist, senkrecht auf der Achse Y steht, der Solargenerator (12) vor dem Anordnen des Raumfahrzeugs (10) in die zwischenzeitliche Ausrichtung zumindest teilweise entfaltet wird und im Verlauf des Anordnens des Raumfahrzeugs in die zwischenzeitliche Ausrichtung eine Nutationsdämpfung vorgenommen wird.

8. Verfahren (50) nach einem der Ansprüche 1 bis 6, **dadurch gekennzeichnet, dass**, während die minimale Trägheitskraft des Raumfahrzeugs (10) senkrecht auf der Achse Y steht, im Verlauf des Anordnens des Raumfahrzeugs in die zwischenzeitliche Ausrichtung eine Nutationssteuerung durchgeführt wird, welche darauf abzielt, die minimale Trägheitsachse des Satelliten mit der Achse D_{H} des kinetischen Moments auszurichten.

9. Verfahren (50) nach einem der vorhergehenden Ansprüche, **dadurch gekennzeichnet, dass** die Ausrichtung des Solargenerators (12) im Verlauf der Reduzierung des kinetischen Moments in Abhängigkeit von dem Winkel zwischen der Richtung D_{S} der Sonne und der Achse D_{H} des kinetischen Moments, auch "Fehlweisungswinkel Θ" genannt, bestimmt wird

10. Verfahren (50) nach Anspruch 9, **dadurch gekennzeichnet, dass** die Ausrichtung des Solargenerators (12) in Bezug auf den Körper des Raumfahrzeugs (10) im Verlauf der Reduzierung des kinetischen Moments ortsfest gehalten wird.

11. Verfahren (50) nach Anspruch 10, **dadurch gekennzeichnet, dass** der Solargenerator (12) im Verlauf der Reduzierung des kinetischen Moments gehalten wird, so dass eine lichtempfindliche Fläche des Solargenerators:
- im Wesentlichen parallel zur Achse D_{H} des kinetischen Moments verläuft, wenn |cos Θ| < V_{S1}, wobei V_{S1} ein vordefinierter Schwellenwert ist,
- im Wesentlichen senkrecht zur Achse D_{H} verläuft, wenn |cos Θ| > V_{S1}, wobei die lichtempfindliche Fläche zur Seite der Sonne ausgerichtet ist.

12. Verfahren (50) nach einem der Ansprüche 10 bis 11, **dadurch gekennzeichnet, dass** während das Raumfahrzeug (10) zwei Solargeneratoren (12) aufweist, welche an jeweiligen Antriebsmechanismen montiert sind, welche dafür angepasst sind, um die Solargeneratoren um jeweilige parallele Achsen Y zu drehen, die Solargeneratoren im Verlauf der Reduzierung des kinetischen Moments gehalten werden, so dass jeweilige lichtempfindliche Flächen der Solargeneratoren im Wesentlichen parallel zu der Achse D_{H} des kinetischen Moments verlaufen und jeweilige, entgegengesetzte Ausrichtungsrichtungen aufweisen, wenn |cos Θ| < V_{S2}, wobei V_{S2} ein vordefinierter Schwellenwert ist.

13. Verfahren (50) nach einem der vorhergehenden Ansprüche, **dadurch gekennzeichnet, dass** die Phase zum Erfassen der Sonne durch ein Raumfahrzeug (10) durch eine Steuervorrichtung (20) ferngesteuert wird, wobei Steuersignale von der Steuervorrichtung aufeinander folgend festgelegt und zum Raumfahrzeug geschickt werden.

14. Programmprodukt für einen Rechner, **dadurch gekennzeichnet, dass** er einen Satz von Befehlen eines Programmcodes aufweist, welche, wenn sie auf einem Prozessor ausgeführt werden, ein Verfahren (50) zur Steuerung einer Phase zum Erfassen der Sonne durch ein Raumfahrzeug (10) nach einem der vorhergehenden Ansprüche zum Einsatz bringen.

15. Vorrichtung (20) zur Steuerung einer Phase zum Erfassen der Sonne durch ein Raumfahrzeug (10) mit einem kinetischen Moment von ungleich Null zur Achse D_{H}, wobei das Raumfahrzeug einen Körper, Stellglieder, einen Solargenerator (12) und einen Mechanismus zum Versetzen des Solargenerators in Drehung um eine Achse Y aufweist, **dadurch gekennzeichnet, dass** es Mittel aufweist, welche dafür ausgelegt sind, um das Raumfahrzeug (10) gemäß einem der Ansprüche 1 bis 13 anzusteuern.

16. Raumsystem, aufweisend ein Raumfahrzeug (10), welches einen Körper, Stellglieder, einen Solargenerator (12) und einen Mechanismus zum Versetzen des Solargenerators in Drehung um eine Achse Y aufweist, **dadurch gekennzeichnet, dass** es eine Vorrichtung zur Steuerung einer Phase zum Erfassen der Sonne durch ein Raumfahrzeug (10) nach Anspruch 15 aufweist.

## Claims

1. Method (50) for controlling a phase of acquisition of the Sun by a spacecraft (10) with a nonzero angular momentum of axis D_{H}, said spacecraft comprising a body, a solar generator (12) and a mechanism for driving said solar generator in rotation about an axis Y, **characterized in that** it comprises steps of:
- (51) controlling actuators of the spacecraft (10) so as to place said spacecraft in an intermediate orientation with respect to the angular momentum, in which the axis Y is substantially orthogonal to the axis D_{H} of the angular momentum,
- (52) controlling the drive mechanism of the solar generator (12), at least partially deployed beforehand, so as to orientate said solar generator toward the Sun,
and **in that**, after the spacecraft (10) has been placed in the intermediate orientation and after the solar generator (12) has been oriented toward the Sun, steps of:
- (53) controlling actuators of the spacecraft (10) so as to reduce the angular momentum of said spacecraft,
- (54) controlling actuators of the spacecraft (10) so as to place said spacecraft in an acquisition orientation with respect to the Sun, in which the axis Y is substantially orthogonal to the direction D_{S} of the Sun with respect to the spacecraft.

2. Method (50) according to Claim 1, **characterized in that** the placement of the spacecraft (10) in the intermediate orientation uses inertial actuators of said spacecraft, preferably gyroscopic actuators and/or reaction wheels.

3. Method (50) according to either of Claims 1 and 2, **characterized in that** the placement of the spacecraft (10) in the acquisition orientation uses inertial actuators of said spacecraft, preferably gyroscopic actuators and/or reaction wheels.

4. Method (50) according to Claim 3, **characterized in that** the inertial actuators are used, in order to place the spacecraft (10) in the acquisition orientation, when the angular momentum of said spacecraft is less than a predefined threshold value.

5. Method (50) according to one of the preceding claims, **characterized in that** the reduction of the angular momentum of the spacecraft (10) placed in the intermediate orientation uses electrical thrusters of said spacecraft.

6. Method (50) according to one of the preceding claims, **characterized in that** only electrical actuators are used during the Sun acquisition phase.

7. Method (50) according to one of the preceding claims, **characterized in that**, the axis of maximum inertia of the spacecraft (10) being orthogonal to the axis Y when the solar generator of said spacecraft is deployed, the solar generator (12) is at least partially deployed prior to the placement of the spacecraft (10) in the intermediate orientation, and nutation damping is carried out during the placement of said spacecraft in said intermediate orientation.

8. Method (50) according to one of Claims 1 to 6, **characterized in that**, the axis of minimum inertia of the spacecraft (10) being orthogonal to the axis Y, nutation control aiming to align the axis of minimum inertia of said satellite with the axis D_{H} of the angular momentum is carried out during the placement of said spacecraft in said intermediate orientation.

9. Method (50) according to one of the preceding claims, **characterized in that** the orientation of the solar generator (12) during the reduction of the angular momentum is determined as a function of the angle, referred to as the "offset angle θ", between the direction D_{S} of the Sun and the axis D_{H} of the angular momentum.

10. Method (50) according to Claim 9, **characterized in that** the orientation of the solar generator (12) is kept fixed with respect to the body of the spacecraft (10) during the reduction of the angular momentum.

11. Method (50) according to Claim 10, **characterized in that** the solar generator (12) is maintained during the reduction of the angular momentum in such a way that a photosensitive surface of said solar generator is:
- substantially parallel to the axis D_{H} of the angular momentum when |cos θ| < V_{S1}, V_{S1}, being a predefined threshold value,
- substantially orthogonal to the axis D_{H} when |cos θ| > V_{S1}, said photosensitive surface being oriented toward the side facing the Sun.

12. Method (50) according to either of Claims 10 and 11, **characterized in that**, the spacecraft (10) comprising two solar generators (12) mounted on respective drive mechanisms capable of rotating said solar generators about respective parallel axes Y, said solar generators are maintained during the reduction of the angular momentum in such a way that the respective photosensitive surfaces of said solar generators are substantially parallel to the axis D_{H} of the angular momentum and with opposite respective pointing directions when |cos θ| < V_{S2}, V_{S2} being a predefined threshold value.

13. Method (50) according to one of the preceding claims, **characterized in that** the phase of acquisition of the Sun by the spacecraft (10) is remotely controlled by a control device (20), control signals being successively determined and sent to the spacecraft by said control device.

14. Computer program product, **characterized in that** it comprises a set of program code instructions which, when they are executed by a processor, carry out a method (50) for controlling a phase of acquisition of the Sun by a spacecraft (10) according to one of the preceding claims.

15. Device (20) for controlling a phase of acquisition of the Sun by a spacecraft (10) with a nonzero angular momentum of axis D_{H}, said spacecraft comprising a body, actuators, a solar generator (12) and a mechanism for driving said solar generator in rotation about an axis Y, **characterized in that** it comprises means configured in order to control said spacecraft (10) in accordance with one of Claims 1 to 13.

16. Space system comprising a spacecraft (10) comprising a body, actuators, a solar generator (12) and a mechanism for driving said solar generator in rotation about an axis Y, **characterized in that** it comprises a device for controlling a phase of acquisition of the Sun by said spacecraft (10) according to Claim 15.
